# EUROPEAN PATENT APPLICATION

(11) **EP 3 835 736 A1**
(43) Date of publication of application: **16.06.2021**
(21) Application number: 20210607.6
(22) Date of filing: 30.11.2020
(51) Int. Cl.: G01F 23/26

(54) **A DEPTH OF LIQUID MEASUREMENT SENSOR AND ASSOCIATED METHODS**

(30) Priority: 11.12.2019 GB 201918179
(71) Applicant: Hastel Limited, St. Ives, Cambridgeshire PE27 4WY (GB)
(72) Inventor: BRETT, Steve, St. Ives, Cambridgeshire PE27 4WY (GB)
(74) Representative: Swindell & Pearson Limited

(57) **Abstract**

A depth of liquid measurement sensor comprising: a collapsible probe comprising a plurality of adjacent conductive cores; means for keeping the collapsible probe substantially straight in use; and means for determining a capacitance between the plurality of adjacent conductive cores.

## Description

A depth of liquid measurement sensor and associated methods.

### TECHNOLOGICAL FIELD

Embodiments of the present disclosure relate to a depth of liquid measurement sensor and associated methods. Some relate to a depth of liquid measurement sensor and associated methods in measurement of depth of fuel oil in a tank.

### BACKGROUND

It is beneficial to measure/monitor the level of liquid, such as fuel oil, in a tank for various reasons. For example, monitoring/measuring the level of depth of liquid in a tank allows for refilling to be scheduled and to occur as required.

Furthermore measurement/monitoring of depth of liquid in a tank allows for alerts to be provided if a sudden change, due to leakage or theft, for example, is detected.

Accordingly, measurement of depth of liquid in a tank can provide safety and security benefits.

### BRIEF SUMMARY

According to some, but not necessarily all, examples there is provided a depth of liquid measurement sensor comprising:
a collapsible probe comprising a plurality of adjacent conductive cores;
means for keeping the collapsible probe substantially straight in use; and
means for determining a capacitance between the plurality of adjacent conductive cores.

In some examples the collapsible probe comprises a flexible wire probe.

In some examples the collapsible probe comprises at least one protective covering.

In some examples each conductive core comprises a plurality of copper strands insulated with at least one protective covering.

In some examples the plurality of copper strands are plated with silver.

In some examples the at least one protective covering comprises polytetrafluoroethylene.

In some examples the collapsible probe is configured to be telescopic, folded and/or coiled.

In some examples the means for keeping the collapsible probe substantially straight in use comprises at least one weight attached to an end of the collapsible probe.

In some examples the means for keeping the collapsible probe substantially straight in use comprises at least one support configured to hold the collapsible probe substantially straight in use.

In some examples the collapsible probe has a cross section substantially in the form of two conjoined circles.

In some examples the means for determining a capacitance between the plurality of adjacent conductive cores comprises electronic circuitry connected to the collapsible probe and configured to determine a capacitance between the plurality of adjacent conductive cores.

In some examples the electronic circuitry comprises a capacitance to digital converter.

In some examples the depth of liquid measurement sensor comprises a housing in which the means for determining a capacitance between the plurality of adjacent conductive cores is located.

In some examples the collapsible probe terminates in a termination assembly in which the plurality of conductors is split apart, folded back on themselves and located in a sealant filled cap.

In some examples the termination assembly is encapsulated in glue lined heat shrink tubing.

In some examples the means for keeping the collapsible probe straight in use comprises at least one weight and the termination assembly is located in a recess in the at least one weight.

In some examples the termination assembly and at least one weight are located in at least one cap.

According to various, but not necessarily all, examples there is provided a method comprising using a depth of liquid measurement sensor as described herein to determine a depth of liquid in a tank.

According to various, but not necessarily all, examples there is provided a method comprising installing a depth of liquid measurement sensor as described herein in a tank to allow monitoring of a depth of liquid in the tank.

According to various, but not necessarily all, examples there is provided a method of manufacturing a depth of liquid measurement sensor, comprising:
providing a collapsible probe comprising a plurality of adjacent conductive cores;
providing means for keeping the collapsible probe substantially straight in use; and
providing means for determining a capacitance between the plurality of adjacent conductive cores.

In some examples the collapsible probe comprises a flexible wire probe.

In some examples each conductive core comprises a plurality of copper strands that are insulated with at least one protective covering.

In some examples the at least one protective covering comprises polytetrafluoroethylene.

In some examples the collapsible probe is configured to be telescopic, folded and/or coiled.

In some examples the collapsible probe has a cross section substantially in the form of two conjoined circles.

In some examples providing means for determining a capacitance between the plurality of adjacent conductive cores comprises connecting, to the collapsible probe, electronic circuitry configured to determine a capacitance between the plurality of adjacent conductive cores.

In some examples the electronic circuitry comprises a capacitance to digital converter.

In some examples the method comprises locating the means for determining a capacitance between the plurality of adjacent conductive cores in a housing.

In some examples the method comprises forming a termination assembly by splitting apart the plurality of conductors, folding the plurality of conductors back on themselves and locating the folded conductors in a sealant filled cap.

In some examples the method comprises encapsulating the termination assembly in glue lined heat shrink tubing.

In some examples providing means for keeping the collapsible probe straight in use comprises locating the termination assembly in a recess in at least one weight.

In some examples the method comprises locating the termination assembly and at least one weight in at least one cap.

### BRIEF DESCRIPTION

Some examples will now be described with reference to the accompanying drawings in which:
FIG 1 shows an example of the subject matter described herein;
FIG 2 shows an example of the subject matter described herein;
FIG 3 shows an example of the subject matter described herein;
FIG 4 shows an example of the subject matter described herein;
FIG 5 shows an example of the subject matter described herein;
FIG 6 shows an example of the subject matter described herein;
FIG 7 shows an example of the subject matter described herein; and
FIG 8 shows an example of the subject matter described herein.

### DETAILED DESCRIPTION

Examples of the disclosure relate to a depth of liquid measurement sensor 10 and associated methods.

In examples, the depth of liquid measurement sensor 10 is configured to be used in measurement of depth of fuel oil such as heating oil and diesel. However, in examples, the depth of liquid measurement sensor 10 can be used with any suitable liquid.

For ease of reference the depth of liquid measurement sensor 10 can be referred to herein as a sensor 10.

In examples, the depth of liquid measurement sensor 10 comprises a collapsible probe 12 comprising a plurality of adjacent conductive cores 14, means 16 for keeping the collapsible probe 14 substantially straight in use, and means 18 for determining a capacitance between the plurality of adjacent conductive cores 14.

In examples, the collapsible probe 12 comprises/is a flexible wire probe 20.

In examples, the probe 12 is collapsible in that the length, width, height and/or volume of the probe 12 can be reduced, for example, for transport and/or storage. In examples, the collapsible probe 12 is configured to be telescopic, folded and/or coiled.

According to some, but not necessarily all, examples the sensor 10 can be located in a fuel tank with the collapsible probe 12 held substantially straight and vertical in the tank. In use, the liquid to be measured/monitored acts as a dielectric in between and/or around the plurality of conductive cores 14 of the collapsible probe 12.

Accordingly, when the depth of liquid in the tank changes, the amount of the collapsible probe 12 located in the liquid, and therefore dielectric, will also change causing a change in the capacitance between the plurality of adjacent conductive cores 14 of the collapsible probe 12. Accordingly, a measurement of the depth of liquid in the tank can be obtained.

In examples, the sensor 10 can be configured to operate in large tanks and therefore storage and/or transport of a probe 12 for use in the sensor 10 can be difficult if the probe 12 is large and remains rigid.

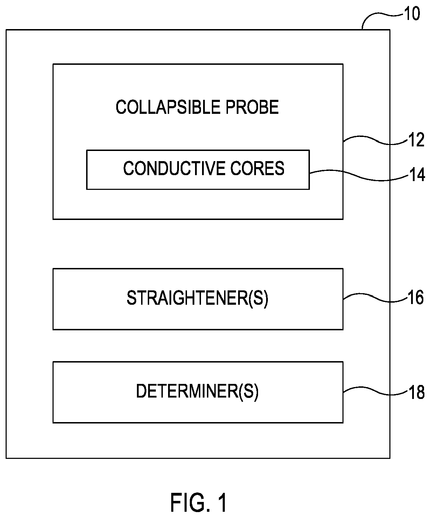

FIG 1 schematically illustrates an example of a depth of liquid measurement sensor 10.

Various features referred to in relation to FIG 1 can be found in the other FIGS.

The depth of liquid measurement sensor 10 of FIG 1 comprises:
a collapsible probe 12 comprising a plurality of adjacent conductive cores 14;
means 16 for keeping the collapsible probe 12 substantially straight in use; and
means 18 for determining a capacitance between the plurality of adjacent conductive cores 14.

In examples, any suitable collapsible probe 12 can be used. For example, any suitable collapsible probe 12 comprising a plurality of adjacent conductive cores 14 configured to allow a determination of a capacitance between the plurality of adjacent conductive cores 14 which is affected by an amount of the collapsible probe 12 located in a liquid can be used.

In examples, the collapsible probe 12 can have any suitable shape, size and/or form.

In examples, the collapsible probe 12 is configured to be telescopic, folded and/or coiled.

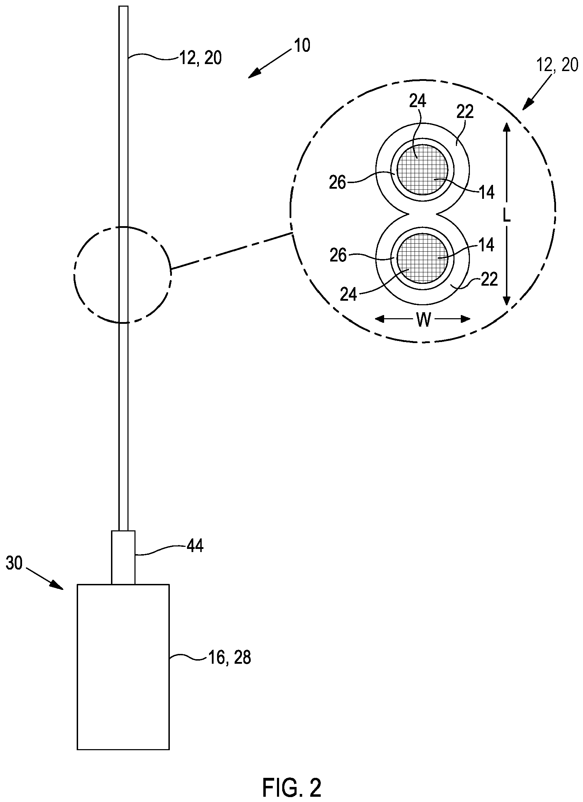

In some, but not necessarily all, examples the collapsible probe 12 comprises/is a flexible wire probe 14. See, for example, FIG 2.

The collapsible probe 12 can have any suitable number of adjacent conductive cores 14 having any suitable shape, size and/or form.

In some, but not necessarily all, examples the collapsible probe 12 has a cross-section substantially in the form of two conjoined circles. See, for example, FIG 2.

However, in the examples, the collapsible probe 12 can have any suitable cross-section to allow a change in a level of liquid in a tank to cause a change in capacitance between adjacent conductive cores 14 of the collapsible probe 12.

For example, the collapsible probe 12 can have a cross-section in the form of a dumbbell, figure of 8 or separated circles.

In examples, the collapsible probe 12 comprises at least one protective covering 22.

In some examples, a conductive core 14 of the collapsible probe 12 comprises a plurality of copper strands insulated with at least one protective covering 22.

Any suitable protective covering or coverings 22 can be used. For example, the at least one protective covering 22 can comprise any suitable material or materials.

In examples, the at least one protective covering 22 is resilient and/or resistant to the liquid or liquids in which the sensor 10 will be used. For example, the at least one protective covering 22 can be resistant to heating oil, diesel and/or water.

In some, but not necessarily all, examples the at least one protective covering 22 comprises polytetrafluoroethylene, PTFE.

In examples, each of the plurality of copper strands 24 are plated with silver 26. See, for example, FIG 2. In some examples, the plated copper strands 24 are laid together and encapsulated in the protective covering 22.

In examples, the collapsible probe is substantially consistent along its length. That is, in examples, the dimensions/size and/or spacing of the various components of the collapsible probe 12 do not significantly change along the length of the collapsible probe 12 to allow for a reliable and consistent determination of the depth of liquid using the sensor 10.

In examples, the dimensions/size of the components of the collapsible probe 12 do not vary by more than 5% from the average along the length of the collapsible probe 12.

In examples, the dimensions/size of the components of different collapsible probes 12 do not vary by more than 5% from the average between probes 12.

In examples, the means 16 for keeping the collapsible probe 12 substantially straight in use can be considered straightening means 16.

Any suitable means 16 for keeping the collapsible probe 12 substantially straight in use can be used. In examples the means 16 for keeping the collapsible probe 12 substantially straight in use can have any suitable shape, size and/or form.

For example, the means 16 for keeping the collapsible probe 12 substantially straight in use can comprise at least one weight 28 attached to an end 30 of the collapsible probe 12 and/or at least one support configured to hold the collapsible probe substantially straight in use.

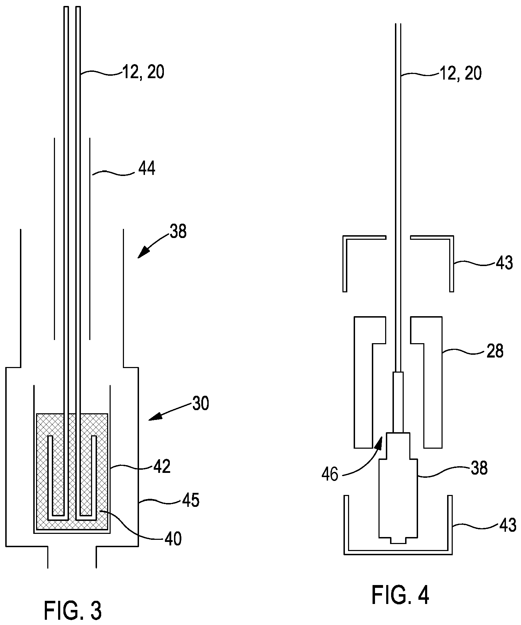

That is, in examples, the means 16 for keeping the collapsible probe substantially straight in use comprises at least one weight 28 attached to an end 30 of the collapsible probe 12. See, for example, FIGs 2 and 4.

Additionally or alternatively, in examples, the means 16 for keeping the collapsible probe 12 substantially straight in use comprises at least one support configured to hold the collapsible probe 12 substantially straight in use.

In examples, at least one support is configured to hold the collapsible probe 12 in a substantially straight position when in use. In examples, the at least one support is configured to be removable from the collapsible probe 12 and separately collapsible for storage and/or transportation.

In examples, the means 16 for keeping the collapsible probe 12 substantially straight in use can be considered at least one straightener, at least one collapsible probe 12 straightening arrangement, at least one collapsible probe 12 straightening structure, at least one collapsible probe 12 straightening device, at least one collapsible probe 12 straightening apparatus and/or at least one collapsible probe 12 straightening mechanism and so on.

In examples, the means 16 for keeping the collapsible probe 12 substantially straight in use can comprise any suitable component or components configured to keep the collapsible probe 12 substantially straight in use.

As use herein substantially straight in use is intended to mean that the collapsible probe 12 is held straight enough to allow a consistent and reliable capacitance between the plurality of adjacent conductive cores 14 of the collapsible probe 12 to be determined and repeatedly and reliably affected by liquid in a tank in which the collapsible probe 12 is placed in use.

In some examples the means 16 for keeping the collapsible probe 12 substantially straight in use is also configured to keep the collapsible probe 12 substantially vertical in use. See, for example, Fig. 2.

Any suitable means 18 for determining a capacitance between the plurality of adjacent conductive cores 14 can be used.

In some, but not necessarily all, examples, the means 18 for determining a capacitance between the plurality of adjacent conductive cores 14 can be considered determining means 18.

In examples, the means 18 for determining a capacitance between the plurality of adjacent conductive cores 14 comprise any suitable component or components configured to determine the capacitance between the plurality of adjacent conductive cores 14.

In some, but not necessarily all, examples the means 18 for determining a capacitance between the plurality of adjacent conductive cores 14 comprises electronic circuitry 34 connected to the collapsible probe 12 and configured to determine a capacitance between the plurality of adjacent conductive cores 14.

Any suitable electronic circuitry can, in examples, be used. For example, the electronic circuitry can use hardware, software or a combination of hardware and software to determine a capacitance between the plurality of adjacent conductive cores 14.

In some examples, the electronic circuitry comprises a capacitance to a digital converter.

In examples, the means 18 for determining a capacitance between the plurality of adjacent conductive cores 14 can be considered at least one determiner, at least one capacitance determining arrangement, at least one capacitance determining structure, at least one capacitance determining device, at least one capacitance determining apparatus and/or at least one capacitance determining apparatus and/or at least one capacitance determining mechanism and so on.

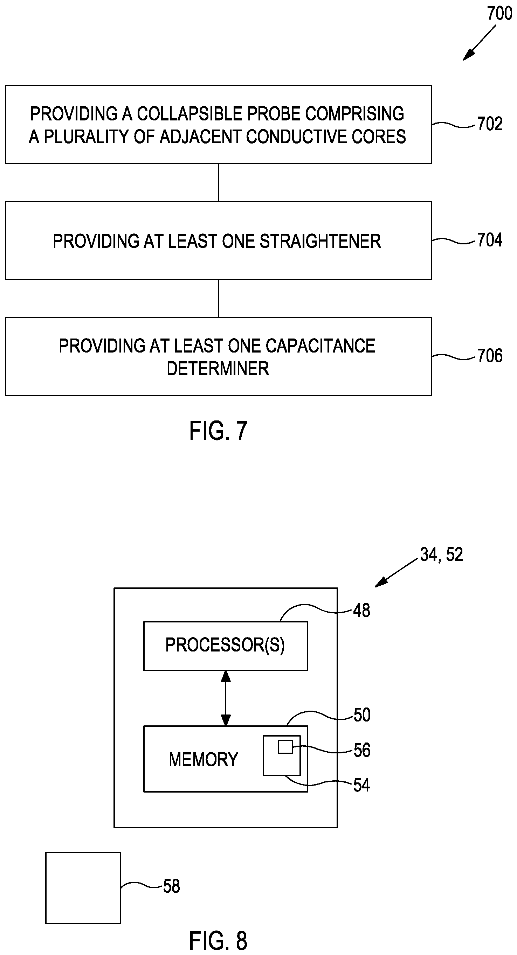

In examples, the electronic circuitry 34 comprises at least one processor 48 and at least one memory 50. See, for example, FIG 8.

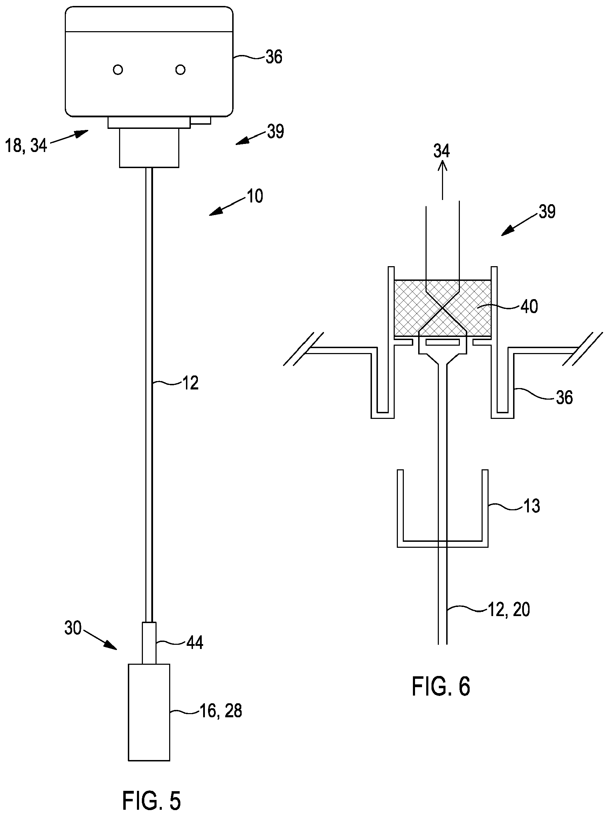

In some, but not necessarily all, examples, the sensor 10 comprises a housing 36 in which the means 18 for determining a capacitance between the plurality of adjacent conductive cores 14 is located. See, for example, FIG 5.

Any suitable housing 36, having any suitable shape, size and/or form can be used.

In examples, any suitable method for determining the capacitance between the plurality of conductive cores 14 and the collapsible probe 12 can be used. For example, the electronic circuity 34 can be configured to charge and discharge the capacitor formed between the conductive cores 14 of the collapsible probe 12 to allow a determination of the capacitance between the plurality of adjacent conductive cores 14.

In examples, the electronic circuitry can store a pre-determined conversion factor that allows a conversion between a capacitance measurement of the collapsible probe 12 to a level of liquid depth in a tank.

The conversion factor can take into account the dielectric properties of the liquid to be measured.

The sensor 10 is advantageous as, for example, the sensor 10 is in contact with the liquid to be measured, and the readings are directly proportional to the amount of the sensor 10 that is submerged.

Accordingly, the measurements are not significantly affected by air temperature, air pressure, internal tank structure, foaming, fuel fumes and so on.

Furthermore, the use of the collapsible probe 12 allows for the sensor 10 to be configured for use in a large tank while providing for easy storage and/or transportation of the probe which otherwise would be difficult to handle.

In examples, the sensor 10 of FIG 1 can comprise any number of additional components, including no additional component.

In some examples, one or more components can be omitted and/or combined.

FIG 2 illustrates an example of a portion of a depth of liquid measurement sensor 10.

In examples, one or more of the element/components illustrated in FIG 2 can be as described in relation to FIG 1.

In example of FIG 2, the collapsible probe 12 is a flexible wire probe 20 comprising two adjacent conductive cores 14.

In the example of FIG 2, the means 16 for keeping the collapsible probe 12 substantially straight in use is a weight 28 attached to an end 30 of the flexible wire probe 20.

Also visible in the example of FIG 2, above the weight 28, is a portion of glue lined heat-shrink tubing 44 provided to provide strain relief.

Also shown in the example of FIG 2 is a cross-section of the flexible wire probe 20.

As can be seen from the illustrated cross-section, in the example of FIG 2 the flexible probe 20 comprises two adjacent conductive cores 14 and has a cross-section substantially in the form of two conjoined circles.

In the illustrated example, the conductive cores 14 comprise a plurality of copper strands 24. In examples, any suitable number of copper strands 24 can be used. For example, a number in the range 5 to 10 copper strands 24 can be used.

In examples, the copper strands are intertwined and/or wound to form the conductive core 14 and are plated with silver 26.

However, in some examples, the plurality of copper strands 24 forming the conductive cores 14 are not plated or are plated with any other suitable material.

The flexible wire probe 20 also has a protective covering 22 insulating the conductive cores 14.

In the example of FIG 2 the protective covering 22 is polytetrafluoroethylene, PTFE.

In examples, the flexible wire probe 20, and more generally the collapsible probe 12 as described herein, can have any suitable dimensions.

For example, in relation to the cross-sectional dimensions of the probe 20, the probe 20 can have a cross-sectional length, I, in the range 2 millimeters to 4 millimeters and a cross-sectional width, w, width in the range 1 millimeter to 2 millimeters.

In some examples, the probe 20 can have a length in the range 2.5 millimeters to 3.5 millimeters and a width in the range 1.2 millimeters to 1.75 millimeters.

In some examples, the probe 20 can have a length of 2.7 millimeters and a width of 1.35 millimeters.

It can be seen from the cross-section of the probe 12 in FIG 2 that, when submerged in liquid, liquid will ingress in the area between the two conductive cores 14 provided by the shape of the collapsible probe 12.

This allows the liquid to act as a dielectric and to affect the capacitance between the conductive cores 14 of the probe 12, 20.

Although two conductive cores 14 have been illustrated in the example of FIG 2, in examples any suitable number of conductive cores 14 can be used.

Similarly, any suitable size, shape and/or form of collapsible probe 12 can be used to allow a determination of capacitance change due to liquid ingress.

In examples, the end 30 of the collapsible probe 12 terminates in a termination assembly 38.

FIG 3 illustrates an example of a termination assembly 30. In FIG 3 a cross section of the termination assembly 38 is shown.

In examples, one or more elements illustrated in FIG 3 can be as described in relation to FIG 1 and/or FIG 2.

For example, the termination assembly illustrated in the example of FIG 3 can be used in the sensor 10 illustrated in FIG 2.

In the example of FIG 3, the collapsible probe 12 is a flexible wire probe 20 comprising two adjacent conductive cores 14.

In the termination assembly 38 the conductive cores 14 and associated protective covering 22 are split apart and folded back on themselves.

In the illustrated example, the folded conductors are located in a sealant 40 filled cap 42.

That is, in examples, the collapsible probe 12 terminates in a termination assembly 30 in which the plurality of conductors 14 is split apart, folded back on themselves and located in a sealant 40 filled cap 42.

In examples, the cap 42 can comprise any suitable material. For example, the cap can comprise any suitable plastic such as low-density polyethylene, LDPE.

Any suitable sealant can be used. For example, any suitable sealant that is compatible with the liquid to be monitored by the sensor 10. In examples epoxy resin can be used.

Any suitable length of the collapsible probe 12 can be bent back in a termination assembly 38.

In examples, a length in the range 5 to 15 millimeters can be bent back. In some examples, the collapsible probe 12 is folded back on itself in the range of 8 to 12 millimeters.

In the example of FIG 3 a section of glue lined heat-shrink tubing 44 is fitted higher up the probe 12 to provide strain relief.

Furthermore, in the example of FIG 3, a further piece of glue lined heat-shrink tubing 45 encapsulates the termination assembly 38 to provide secondary sealing.

Accordingly, in examples, the termination assembly 38 is encapsulated in glue lined heat-shrink tubing 45.

In examples where a weight is attached to the end of the probe 12, the glue lined heat-shrink tubing 45 protects the probe 12 from the weight 28.

In some examples the end 30 of the collapsible probe 12 and the weight are encapsulated by injection moulding. This can allow sealing and attaching of the weight 28 to be performed in one operation.

The termination assembly 38 is advantageous as it provides secure attachment to a weight 28, for example, to allow the collapsible probe 12 to be kept substantially straight in use while providing proofing the end 30 of the collapsible probe 12 to the liquid in which the sensor 10 is immersed.

FIG 4 illustrates an example of a portion of a depth of liquid measurement sensor 10. In the example of FIG 4 a cross section is shown.

In examples, one or more elements illustrated in FIG 4 can be as described in relation to FIG 1, 2 and/or 3.

The example illustrated in FIG 4 shows a collapsible probe 12 in the form of a flexible wire probe 20 comprising a termination assembly 38. In the example of FIG 4, the termination assembly 38 can be as described in relation to FIG 3.

In the example of FIG 4, the termination assembly 38 is located in a recess 46 of a weight 28.

That is, in examples, the means for keeping the collapsible probe 12 straight in use comprises at least one weight 28 and the termination assembly 38 is located in a recess 46 in the at least one weight 28.

In the illustrated example of FIG 4, the termination assembly 38 and at least one weight 28 are located in at least two caps 43.

In examples, the cap can comprise any suitable material. For example, the cap can comprise any suitable plastic such as low-density polyethylene, LDPE.

Locating the termination assembly 38 in a recess 46 of the weight 28 is advantageous as, for example, the weight 28 protects the wire assembly from impact damage during handling, installation and use.

Additionally or alternatively, locating the termination assembly 38 in the recess 46 of the weight 28 reduces the overall length of the assembly. This is advantageous as this area of the sensor 10 is not sensitive and therefore represents a "dead" portion for depth of liquid measurement.

This means that changes in liquid level in this area cannot be detected and so it is advantageous to minimize the overall length by use of a recess 46 in the weight 28.

FIG 5 illustrates an example of a depth of liquid measurement sensor 10.

In examples, one or more elements illustrated in FIG 5 can be as described in relation to FIG 1, FIG 2, FIG 3 and/or FIG 4.

In the example of FIG 5, a collapsible probe 12 having a weight 28 attached at an end 30 is illustrated. See, for example FIG 2.

Also illustrated in the example of FIG 5 is a housing 36 at an upper end of the collapsible probe 12 in which means 18 for determining capacitance between the plurality of adjacent conductive cores 14 is located.

In use the collapsible probe 12 and weight can be located in a tank comprising liquid and the housing 36 left outside the tank.

In some examples, the housing 36 can comprise a threaded portion adjacent the collapsible probe 12 to allow the sensor 10 to be securely fitted in an aperture of the tank to prevent, for example, leakage/loss of the liquid to be measured/monitored.

In examples, the sensor 10 comprises an upper termination assembly 39.

FIG 6 illustrates an example of an upper termination assembly 39.

In examples, one or more elements illustrated in FIG 6 can be as described in relation to one or more of FIGS 1 to 5.

In the example of FIG 6, the collapsible probe 12 comprises a flexible wire probe 20.

As can be seen in the illustrated example, in the upper termination assembly 39 the conductors 14 of the probe 12 are split and pass through separate apertures in the housing 36.

The conductors are then rejoined using any suitable means. In the illustrated example a cable tie is used to rejoin the conductors of the collapsible probe 12.

Sealant 40 is provided in a recess to seal the assembly. Any suitable sealant can be used. For example, any sealant that is compatible with the material(s) of the housing 36 and the liquid that is to be monitored by the sensor 10.

In some examples unplasticised polyvinylchloride, uPVC, can be used.

In examples the sealant sets hard to improve the strength of the join between the housing 36 and the collapsible probe 12.

The free ends of the conductors 14 of the probe 12 are connected to electronic circuitry 34 (not illustrated in FIG 6). For example, the free ends of the conductive cores 14 can be connected to an electronics board to allow determination of capacitance between the conductive cores 14 of the probe 12.

In the example of FIG 6, a plug 13 is located in the enclosure to provide further sealing and to provide a tidy finish to the upper termination assembly 39.

In examples, the plug 13 can be considered a bung. The plug/bung 13 can be formed from any suitable material. In some examples, the plug/bung 13 can be a rigid plastic plug/bung 13.

The upper termination assembly 39 illustrated in the example of FIG 6 is advantageous as it provides for mechanical strength to allow the sensor 10 to be durable and resistant to stresses provided by weight 28 located at the opposite end of the probe 12. Furthermore, the upper termination assembly 39 illustrated in FIG 6 also provides sealing to protect the electronic circuity from the liquid being measured/monitored.

According to some, but not necessarily all examples, there is provided a method comprising using a depth of liquid measurement sensor 10 as described herein.

For example, a method comprising using a depth of liquid measurement sensor 10 as described herein to determine a depth of liquid in a tank.

In examples, using a depth of liquid measurement sensor 10 as described herein comprises installing a sensor 10 as described herein and/or using a sensor 10 as described herein to measure/monitor a depth or level of liquid in a tank.

According to some, but not necessarily all, examples there is provided a method comprising installing a depth of liquid measurement sensor 10 as described herein in a tank to allow monitoring of a depth of liquid in the tank.

In example installing a depth of liquid sensor 10 comprises locating and/or fitting a depth of liquid sensor 10 in and/or on a tank to allow measurement of the depth of liquid in the tank.

According to some, but not necessarily all, examples of the disclosure there is provided a method comprising manufacturing and/or providing a depth of liquid measurement sensor 10 as described herein.

For example, a method of manufacturing a depth of liquid measurement sensor 10 as described in relation to one or more of FIGS 1 to 6.

FIG 7 illustrates an example of a method 700. The method 700 illustrated in the example of FIG 7 is a method of manufacturing a depth of liquid measurement sensor 10.

In examples, the depth of liquid measurement sensor 10 can be as described in relation to one or more of FIGS 1 to 6.

At block 702 a collapsible probe 12 comprising a plurality adjacent conductive cores 14 is provided.

Any suitable method or methods for providing a collapsible probe 12 comprising a plurality of adjacent conductive cores 14 can be used.

For example, any suitable method of manufacturing and/or fabrication and/or providing and/or assembling a collapsible probe 12 comprising a plurality of adjacent conductive cores 14 can be used.

In examples, a plurality of wires can be bonded together to form the collapsible probe 12.

Accordingly, in examples the collapsible probe 12 comprises a flexible wire probe 20.

In some, but not necessarily all, examples each conductive core 14 comprises a plurality of copper strands 24 that are insulated with at least one protective covering 22.

In examples the at least one protective covering comprises polytetrafluoroethylene, PTFE.

In some examples the collapsible probe 12 is configured to be telescopic, folded and/or coiled.

In examples the collapsible probe has a cross section substantially in the form of two conjoined circles.

At block 704 means 16 for keeping the collapsible probe 12 substantially straight in use are provided.

Any suitable method or methods for providing means 16 for keeping the collapsible probe 12 substantially straight in use can be used.

For example, any suitable method of manufacturing and/or fabricating and/or providing and/or locating and/or assembling means 16 for keeping the collapsible probe 12 substantially straight in use can be used.

In some examples providing means 16 for keeping the collapsible probe 12 substantially straight in use comprises locating at least one weight 28 at an end 30 of the collapsible probe 12.

In examples the method 700 comprises forming a termination assembly 38 by splitting apart the plurality of conductors 14, folding the plurality of conductors 14 back on themselves and locating the folded conductors in a sealant 40 filled cap 42.

In some examples the method 700 comprises encapsulating the termination assembly 38 in glue lined heat shrink tubing 45.

In examples providing means 16 for keeping the collapsible probe 12 straight in use comprises locating the termination assembly 38 in a recess 46 of at least one weight 28.

The termination assembly 38 and at least one weight 28 can be located in at least one cap 43.

At block 706 means 18 for determining a capacitance between the plurality of adjacent conductive cores 14 are provided.

Any suitable method or methods for providing means 18 for determining a capacitance between the plurality of adjacent conductive cores 14 can be used.

For example, any suitable method of manufacturing and/or fabricating and/or providing and/or locating and/or assembling means 18 for determining a capacitance between the plurality of adjacent conductive cores 14 can be used.

In some, but not necessarily all, examples providing means 18 for determining a capacitance between the plurality of adjacent conductive cores 14 comprises connecting, to the collapsible probe 12, electronic circuitry 34 configured to determine a capacitance between the plurality of adjacent conductive cores 14.

In examples the electronic circuitry 34 comprises a capacitance to digital converter.

In some examples the method 700 comprises locating the means 18 for determining a capacitance between the plurality of adjacent conductive cores 14 in a housing 36.

In examples the method 700 comprises attaching the collapsible probe 12 to a housing 36.

In some examples the method 700 comprises splitting the conductors 14 of the collapsible probe 12 and passing the conductors 14 through separate apertures in the housing 36.

In examples the method 700 comprises rejoining the conductors 14 after they have passed through the apertures of the housing 36. At least one cable tie can be used to rejoin the conductors 14.

In some examples the method 700 comprises providing sealant 40 in a recess of the housing 36 to seal the assembly.

In examples, the method 700 is configured to provide probes 12 of substantially the same form and/or characteristics. In examples, the dimensions/size of the components of the collapsible probes 12 do not vary by more than 5% from the average between probes 12.

The blocks illustrated in the Fig 7 can represent steps in a method. The illustration of a particular order to the blocks does not necessarily imply that there is a required or preferred order for the blocks and the order and arrangement of the block may be varied. Furthermore, it may be possible for some blocks to be omitted.

FIG 8 schematically illustrates electronic circuitry 34. In the example of FIG 8 the electronic circuitry 34 is configured to control use of a sensor 10 as described herein.

In examples, the electronic circuitry 34 of the example of FIG 8 can form at least part of the means 18 for determining a capacitance between the plurality of adjacent conductive cores 14.

Fig 8 can therefore be considered to illustrate an example of a controller 52. Implementation of a controller 52 may be as controller circuitry. The controller 52 may be implemented in hardware alone, have certain aspects in software including firmware alone or can be a combination of hardware and software (including firmware).

As illustrated in Fig 8 the controller 52 may be implemented using instructions that enable hardware functionality, for example, by using executable instructions of a computer program 54 in a general-purpose or special-purpose processor 48 that may be stored on a computer readable storage medium (disk, memory etc.) to be executed by such a processor 48.

The processor 48 is configured to read from and write to the memory 50. The processor 48 may also comprise an output interface via which data and/or commands are output by the processor 48 and an input interface via which data and/or commands are input to the processor 48.

The memory 50 stores a computer program 54 comprising computer program instructions (computer program code) 56 that controls the operation of the sensor 10 when loaded into the processor 48. The processor 48 by reading the memory 50 is able to load and execute the computer program 54.

As illustrated in Fig 8, the computer program 54 may arrive at the sensor 10 via any suitable delivery mechanism 58. The delivery mechanism 58 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 54. The delivery mechanism may be a signal configured to reliably transfer the computer program 54. The sensor 10 may propagate or transmit the computer program 54 as a computer data signal. The computer program instructions may be comprised in a computer program, a non-transitory computer readable medium, a computer program product, a machine readable medium. In some but not necessarily all examples, the computer program instructions may be distributed over more than one computer program.

Although the memory 56 is illustrated as a single component/circuitry it may be implemented as one or more separate components/circuitry some or all of which may be integrated/removable and/or may provide permanent/semi-permanent/ dynamic/cached storage.

Although the processor 48 is illustrated as a single component/circuitry it may be implemented as one or more separate components/circuitry some or all of which may be integrated/removable. The processor 48 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The various elements of the sensor described herein are operationally coupled and any number or combination of intervening elements can exist (including no intervening elements).

Where a structural feature has been described, it may be replaced by means for performing one or more of the functions of the structural feature whether that function or those functions are explicitly or implicitly described.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

According to various, but not necessarily all, examples there is provided a depth of liquid measurement sensor comprising:
a collapsible probe comprising a plurality of adjacent conductive cores;
means for keeping the collapsible probe substantially straight in use; and
means for determining a capacitance between the plurality of adjacent conductive cores.

In some examples, the collapsible probe comprises a flexible wire probe.

In some examples, the collapsible probe comprises at least one protective covering.

In some examples, each conductive core comprises a plurality of copper strands insulated with at least one protective covering.

In some examples, the plurality of copper strands are plated with silver.

In some examples, the at least one protective covering comprises polytetrafluoroethylene.

In some examples, the collapsible probe is configured to be telescopic, folded and/or coiled.

In some examples, the means for keeping the collapsible probe substantially straight in use comprises at least one weight attached to an end of the collapsible probe.

In some examples, the means for keeping the collapsible probe substantially straight in use comprises at least one support configured to hold the collapsible probe substantially straight in use.

In some examples, the collapsible probe has a cross section substantially in the form of two conjoined circles.

In some examples, the means for determining a capacitance between the plurality of adjacent conductive cores comprises electronic circuitry connected to the collapsible probe and configured to determine a capacitance between the plurality of adjacent conductive cores.

In some examples, the electronic circuitry comprises a capacitance to digital converter.

In some examples, the depth of liquid measurement sensor comprises a housing in which the means for determining a capacitance between the plurality of adjacent conductive cores is located.

In some examples, the collapsible probe terminates in a termination assembly in which the plurality of conductors is split apart, folded back on themselves and located in a sealant filled cap.

In some examples, the termination assembly is encapsulated in glue lined heat shrink tubing.

In some examples, the means for keeping the collapsible probe straight in use comprises at least one weight and the termination assembly is located in a recess in the at least one weight.

In some examples, the termination assembly and at least one weight are located in at least one cap.

According to various, but not necessarily all, examples there is provided a method comprising using a depth of liquid measurement sensor as described herein to determine a depth of liquid in a tank.

According to various, but not necessarily all, examples there is provided a method comprising installing a depth of liquid measurement sensor as described herein in a tank to allow monitoring of a depth of liquid in the tank.

According to various, but not necessarily all, examples there is provided a method of manufacturing a depth of liquid measurement sensor, comprising:
providing a collapsible probe comprising a plurality of adjacent conductive cores;
providing means for keeping the collapsible probe substantially straight in use; and
providing means for determining a capacitance between the plurality of adjacent conductive cores.

In some examples, the collapsible probe comprises a flexible wire probe.

In some examples, each conductive core comprises a plurality of copper strands that are insulated with at least one protective covering.

In some examples, the at least one protective covering comprises polytetrafluoroethylene.

In some examples, the collapsible probe is configured to be telescopic, folded and/or coiled.

In some examples, the collapsible probe has a cross section substantially in the form of two conjoined circles.

In some examples, providing means for determining a capacitance between the plurality of adjacent conductive cores comprises connecting, to the collapsible probe, electronic circuitry configured to determine a capacitance between the plurality of adjacent conductive cores.

In some examples, the electronic circuitry comprises a capacitance to digital converter.

In some examples, the method comprises locating the means for determining a capacitance between the plurality of adjacent conductive cores in a housing.

In some examples, the method comprises forming a termination assembly by splitting apart the plurality of conductors, folding the plurality of conductors back on themselves and locating the folded conductors in a sealant filled cap.

In some examples, the method comprises encapsulating the termination assembly in glue lined heat shrink tubing.

In some examples, providing means for keeping the collapsible probe straight in use comprises locating the termination assembly in a recess in at least one weight.

In some examples, the method comprises locating the termination assembly and at least one weight in at least one cap.

## Claims

1. A depth of liquid measurement sensor comprising:
a collapsible probe comprising a plurality of adjacent conductive cores;
means for keeping the collapsible probe substantially straight in use; and
means for determining a capacitance between the plurality of adjacent conductive cores.

2. A depth of liquid measurement sensor as claimed in claim 1, wherein the collapsible probe comprises a flexible wire probe.

3. A depth of liquid measurement sensor as claimed in claim 1 or 2, wherein the collapsible probe comprises at least one protective covering.

4. A depth of liquid measurement sensor as claimed in claim 1, 2 or 3, wherein each conductive core comprises a plurality of copper strands insulated with at least one protective covering.

5. A depth of liquid measurement sensor as claimed in claim 4, wherein the plurality of copper strands are plated with silver.

6. A depth of liquid measurement sensor as claimed in any preceding claim, wherein the collapsible probe is configured to be telescopic, folded and/or coiled.

7. A depth of liquid measurement sensor as claimed in any preceding claim, wherein the means for keeping the collapsible probe substantially straight in use comprises at least one weight attached to an end of the collapsible probe.

8. A depth of liquid measurement sensor as claimed in any of claims 1 to 7, wherein the means for keeping the collapsible probe substantially straight in use comprises at least one support configured to hold the collapsible probe substantially straight in use.

9. A depth of liquid measurement sensor as claimed in any preceding claim, wherein the collapsible probe has a cross section substantially in the form of two conjoined circles.

10. A depth of liquid measurement sensor as claimed in any preceding claim, wherein the means for determining a capacitance between the plurality of adjacent conductive cores comprises electronic circuitry connected to the collapsible probe and configured to determine a capacitance between the plurality of adjacent conductive cores.

11. A depth of liquid measurement sensor as claimed in claim 11, wherein the electronic circuitry comprises a capacitance to digital converter.

12. A depth of liquid measurement sensor as claimed in any preceding claim, comprising a housing in which the means for determining a capacitance between the plurality of adjacent conductive cores is located.

13. A depth of liquid measurement sensor as claimed in any preceding claim, wherein the collapsible probe terminates in a termination assembly in which the plurality of conductors is split apart, folded back on themselves and located in a sealant filled cap.

14. A depth of liquid measurement sensor as claimed in claim 14, wherein the termination assembly is encapsulated in glue lined heat shrink tubing.

15. A depth of liquid measurement sensor as claimed in claim 14 or 15, wherein the means for keeping the collapsible probe straight in use comprises at least one weight and the termination assembly is located in a recess in the at least one weight.
